**Europäisches Patentamt**

**European Patent Office**

**Office européen des brevets**

(19)

(11) Veröffentlichungsnummer: **0 288 706**

**A2**

## EUROPÄISCHE PATENTANMELDUNG

(12)

(21) Anmeldenummer: 88103954.9

(22) Anmeldetag: 12.03.88

(51) Int. Cl.⁴: **B65G 27/08** , **B65G 27/24**

(30) Priorität: 25.04.87 DE 3713979

(43) Veröffentlichungstag der Anmeldung:
02.11.88 Patentblatt 88/44

(84) Benannte Vertragsstaaten:
CH DE FR GB IT LI

(71) Anmelder: **Schwabe GmbH**
**Wasenstrasse 25**
**D-7068 Urbach(DE)**

(72) Erfinder: **Die Erfinder haben auf ihre**
**Nennung verzichtet**

(74) Vertreter: **Rüger, Rudolf, Dr.-Ing. et al**
**Webergasse 3 Postfach 348**
**D-7300 Esslingen/Neckar(DE)**

(54) **Schwingförderer.**

(57) Ein Schwingförderer mit einer bspw. zur Aufnahme eines Behälters (2) geeigneten Schwingplatte (1) weist der Schwingplatte (1) eine Schwingbewegung mit einer Hauptförderrichtung erteilende elektromagnetische Schwingankermotoren (6) auf, die aus einem ortsfesten Stator (7) einem mit der Schwingplatte fest verbundenen Anker (16) und eine aus einer Stromquelle mit Wechselstrom oder pulsierendem Gleichstrom speisbaren Erregerspule (12) bestehen, die auf ein eine mit der Ankerpolfläche zusammenwirkende Statorpolfläche tragendes Polstück (10) des Stators aufgesetzt ist. Außerdem sind Federmittel vorhanden, durch die die Schwingplatte horizontal und vertikal begrenzt beweglich elastisch abgestützt ist.

Die Federmittel sind durch schmale, federelastische Stege (18) eines Ausnehmungen (20) aufweisenden Blech-oder dünnen Materialstreifens (19) gebildet, durch dessen Ausnehmungen (20) die Stege begrenzt sind und der an der Schwingplatte und den Statoren oder dem Stator oder einer diese bzw. diesen tragenden Grundplatte (4) befestigt ist.

Fig. 2

## Schwingförderer

Die Erfindung betrifft einen Schwingförderer mit einer bspw. zur Aufnahme eines Behälters geeigneten Schwingplatte, mit der Schwingplatte eine Schwingbewegung mit einer Hauptförderrichtung erteilenden elektromagnetischen Antriebsmitteln in Gestalt von Schwingankermotoren, die einen ortsfesten Stator, einen mit der Schwingplatte fest verbundenen Anker und eine aus einer Stromquelle mit Wechselstrom oder pulsierendem Gleichstrom speisbare Erregerspule aufweisen, welche auf ein eine mit einer Ankerpolfläche zusammenwirkende Statorpolfläche tragendes Polstück des Stators aufgesetzt ist, sowie mit Federmitteln, durch die die Schwingplatte horizontal und vertikal begrenzt beweglich elastisch abgestützt ist.

Bei einem aus der US-PS 3048 260 sowohl in einer Ausführung als Kreisförderer als auch in einer Ausführung als Linearförderer bekannten Schwingförderer sind die zum Antrieb der Schwingplatte dienenden Schwingankermotoren mit ihnen zugeordneten länglichen Blattfederpaketen jeweils zu einer Antriebs-Baueinheit zusammengefaßt. Mehrere solcher Antriebs-Baueinheiten sind zwischen einem mit einer Zusatzmasse ausgebildeten Chassis oder Grundgestell und der Schwingplatte angeordnet. Wegen des durch die räumliche Zuordnung der aktiven Polflächen zu den Blattfederpaketen vorgegebenen Schwingungsverhaltens der einzelnen Antriebs-Baueinheiten ist die räumliche Ausrichtung, in der die Baueinheiten an der gemeinsamen Schwingplatte verankert sind, kritisch. Um das Auftreten toter Zonen oder von Nachteilen hinsichtlich des Wirkungsgrades zu vermeiden, erfordern die Antriebs-Baueinheiten bei ihrer Montage eine zusätzliche genaue Abstimmung und Einjustierung, was umständlich und aufwendig ist.

Eine günstigere Anordnung der Federelemente weist demgegenüber ein aus der DE-OS 2051 573 bekanntes Antriebsaggregat zur Erzeugung von gleichzeitigen Hub-und Drehschwingungen, insbesondere für Wendelförderer mit zwei relativ zueinander beweglichen Teilen auf, bei dem diese beiden Teile und die die Federelemente bildenden Verbindungselemente dieser Teile zu einem aus Kunststoff bestehenden Körper zusammengefaßt sind. Dieser Kunststoffkörper hat im wesentlichen die Form eines Topfes mit durchbrochener Topfwand, dessen ringförmiger Topfrand von dem einen der beiden Teile, dessen durchbrochene Topfwand von den Verbindungs-oder Federelementen und dessen Topfboden von dem anderen der beiden Teile gebildet ist. Abgesehen davon, daß der einstückige, topfförmige Kunststoffkörper zu seiner Herstellung aufwendige und komplizierte Formen erfordert, muß der Kunststoffkörper in einer mit dem Chassis verbundenen topfartigen Hülse untergebracht sein. Die Ausbildung eines Linearförderers ist auf diese Weise nicht möglich.

Aufgabe der Erfindung ist es, einen Schwingförderer zu schaffen, der sich durch einen besonders einfachen Aufbau der federelastischen Halterung der Schwingplatte auszeichnet, wobei die zugehörigen Federelemente mit hoher Präzision leicht herstellbar und die Federungseinrichtungen insgesamt mit geringem Aufwand, insbesondere auch hinsichtlich der Einjustierung, montierbar sind.

Zur Lösung dieser Aufgabe ist der eingangs genannte Schwingförderer erfindungsgemäß dadurch gekennzeichnet, daß die Federmittel durch schmale, federelastische Stege eines Ausnehmungen aufweisenden Blech-oder dünnen Materialstreifens gebildet sind, durch dessen Ausnehmungen die Stege begrenzt sind und der an der Schwingplatte und den Statoren oder dem Stator oder einer diese bzw. diesen tragenden Grundplatte befestigt ist.

Die Ausnehmungen können mit Vorteil ausgestanzt oder ausgeschnitten sein, was mittels eines geeigneten Werkzeuges in einem automatischen Arbeitsablauf geschehen kann. In jedem Falle sind aber in dem Blechoder Materialstreifen die einzelnen Stege in exakter gegenseitiger räumlicher Zuordnung fixiert, so daß sich auch besonders einfache Montageverhältnisse ergeben, weil der Blechstreifen lediglich an der Schwingplatte und bspw. der Grundplatte befestigt zu werden braucht. Durch geeignete Materialwahl und zweckentsprechende Bemessung der Dicke und der die Länge der Stege bestimmenden Breite des Blech-oder Materialstreifens sowie der Umrißgestaltung der Ausnehmungen und deren Verteilung können praktisch beliebige Federungseigenschaften der federelastischen Abstützung der Schwingplatte erzielt werden.

Auch können zweckmäßigerweise die Stege um ihre Längsachse verwunden sein, derart, daß sie über einen Teil ihrer Länge in Ebenen liegen, die mit der Blech-oder Materialstreifenebene einen vorbestimmten Winkel kleiner 90° einschließen. Durch entsprechende Bemessung des verwundenen Bereichs sowie des Verwindungswinkels lassen sich die Federungseigenschaften ebenfalls beeinflussen, wobei gleichzeitig auch eine günstige Belastung der Stege erreicht werden kann. Das Verwinden der Stege kann problemlos durch ein entsprechendes Folgewerkzeug beim Stanzvorgang erfolgen.

In der Regel ist es vorteilhaft, die Ausnehmungen in gleichen Abständen anzuordnen, so daß sich auch gleich breite und gleichmäßig verteilt angeordnete Stege ergeben. Es sind aber auch Ausführungsformen denkbar, bei denen mit Rücksicht auf die zu erzielenden Schwingungseigenschaften der Schwingplatte es zweckmäßig sein kann, die Ausnehmungen über die Länge des Blechstreifens unterschiedlich zu gestalten oder in verschiedenen Abständen anzuordnen, bspw. derart, daß Gruppen von Stegen gebildet werden, die dann wiederum durch eine größere Lücke voneinander getrennt sind. Die Stege selbst sind in einer bevorzugten Ausführungsform gegenüber der Schwingplatte mit gleicher Ausrichtung in einer Richtung geneigt angeordnet, derart, daß sie mit der Schwingplatte einen Winkel von kleiner 90° einschließen. Damit ergeben sich sehr einfache und günstige Antriebsverhältnisse für die Schwingankermotoren. Prinzipiell sind aber auch Ausführungsformen denkbar, bei denen die Stege rechtwinklig zu der Schwingplatte verlaufend angeordnet sind und von der von den Schwingankermotoren entsprechend angetriebenen Schwingplatte aus dieser Ausgangslage elastisch ausgelenkt werden.

Sehr einfache und übersichtliche Verhältnisse ergeben sich, wenn die länglichen Ausnehmungen zumindest im Bereiche der Stege parallelflankig begrenzt sind, so daß sich auch entsprechende, im Prinzip leistenartige Stege ergeben. Wie schon erwähnt, ist es auch häufig am einfachsten und übersichtlichsten, wenn alle Stege gleichgestaltet sind.

Der die Stege enthaltende Blech-oder Materialstreifen kann eben sein, wobei, wie vorstehend erläutert, die Stege um ihre Längsachse verwunden sein können; er wird für einen Kreisförderer entsprechend der Kreisform der Schwingplatte gebogen, während bei einem Linearförderer gerade Streifenstücke Verwendung finden.

In einer alternativen Ausführungsform kann die Anordnung aber auch derart getroffen sein, daß der Blech-oder Materialstreifen unter Ausbildung von von der Schwingplatte zu den Statoren oder dem Stator bzw. der Grundplatte verlaufenden Wellen oder rinnenförmigen Vertiefungen in Längsrichtung gewellt oder mäanderförmig gebogen ist. Durch die Wellung oder mäanderförmige Verbiegung wird die Steifigkeit des Blech-oder Materialstreifens verändert, so daß sich auch mit einfachen Mitteln Federeigenschaften der Stege ergeben, die für viele Einsatzzwecke sich als vorteilhaft erwiesen haben. Zweckmäßig ist es dabei, wenn die Stege in den quer zu der Schwingplattenberandung angeordneten Wandbereichen der Wellen oder rinnenförmigen Vertiefungen ausgebildet sind, so daß die Stege in den im wesentlichen quer zu der Berandung der Schwingplatte ausgerichteten "Wänden" der Wellen oder Vertiefungen liegen, d.h. eine ähnliche Orientierung aufweisen wie die eingangs erläuterten verwundenen Stege.

In einigen geschilderten Ausführungsformen besteht der Blechstreifen mit Vorteil aus Federstahl, wobei insbesondere bei größeren Blechstärken die Ausnehmungen bei weichgeglühtem Material ausgestanzt werden und anschließend der Blechstreifen gehärtet wird. Insbesondere bei kleineren Schwingförderern sind aber auch Ausführungsforem denkbar, bei denen der Materialstreifen aus einem Kunststoffmaterial besteht. Dabei sind die Ausnehmungen und die davon begrenzten Stege angeformt, doch ist es bspw. bei flachen, nicht verwundenen Stegen auch denkbar, die Ausnehmungen aus dem Materialstreifen auszustanzen oder auszuschneiden.

Bei allen Ausführungsformen ist es von Vorteil, wenn der Blech-oder Materialstreifen an der Schwingplatte und/oder der Grundplatte an einem randseitigen, durchgehenden Befestigungsbereich befestigt ist, der sich außerhalb der die Stege begrenzenden Ausnehmungen erstreckt. Dabei ergeben sich sehr einfache Verhältnisse, wenn der Blech-oder Materialstreifen an der Seitenwand der Schwingplatte, bspw. mittels Schrauben oder Festschweißen oder einer anderen zweckentsprechenden Befestigungsart befestigt ist.

In der Zeichnung sind Ausführungsbeispiele des Gegenstandes der Erfindung dargestellt. Es zeigen:

Fig. 1 einen Schwingförderer gemäß der Erfindung, in der Ausbildung als Kreisförderer, in perspektivischer Darstellung,

Fig. 2 den Schwingförderer nach Fig. 1, geschnitten längs der Linie II-II der Fig. 1, in einer Draufsicht,

Fig. 3 einen Schwingförderer gemäß der Erfindung, in der Ausbildung als Linearförderer, in einer Seitenansicht,

Fig. 4 den Schwingförderer nach Fig. 3, geschnitten längs der Linie IV-V der Fig. 5 , in einer Seitenansicht,

Fig. 5 den Schwingförderer nach Fig. 3, in einer stirnseitigen Ansicht,

Fig. 6 einen Federblechstreifen des Schwingförderers nach Fig. 1 oder 3, in einer perspektivischen Teildarstellung, im Ausschnitt und in einem anderen Maßstab,

Fig. 7 einen Federblechstreifen des Schwingförderers nach Fig. 1 oder Fig. 3, in einer anderen Ausführungsform, in einer Seitenansicht, im Ausschnitt und in einem anderen Maßstab,

Fig. 8 den Blechstreifen nach Fig. 7, geschnitten längs der Linie VIII-VIII der Fig. 7, in einer Draufsicht, und

Fig. 9 die Befestigung des Blechstreifens nach Fig.6, unter Verwendung einer Abdichtmanschette, in einer schematischen vergrößerten Ausschnittsdarstellung und in einer Seitenansicht.

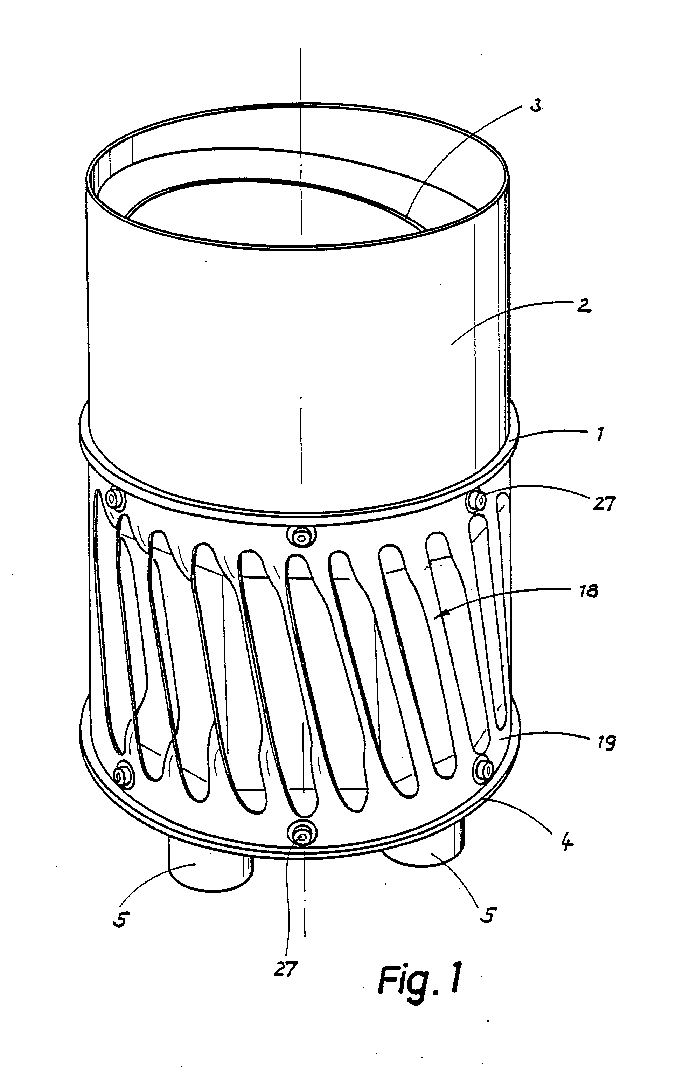

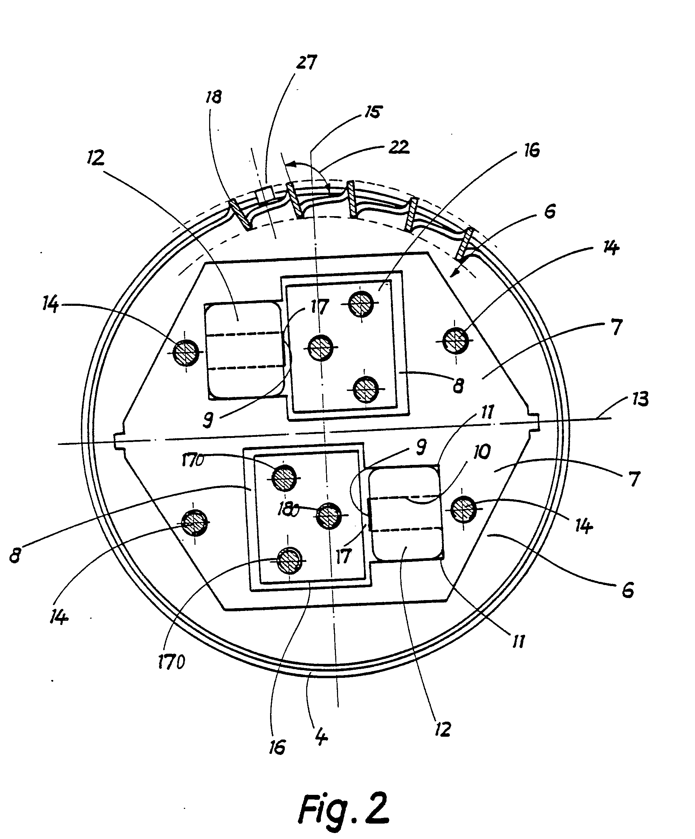

Der in den Fig. 1,2 dargestellte Schwingförderer ist ein sogenannter Kreisförderer. Er weist eine kreisrunde metallische Schwingplatte 1 auf, auf der ein koaxialer topfförmiger Behälter 2 angeordnet ist, an dessen Innenwand bei 3 angedeutete Stege schraubenförmig verlaufend angeordnet sind, auf denen in den Behälter 2 eingebrachte Massengüter, bspw. kleine Schrauben, unter der Wirkung der der Schwingplatte 1 erteilten Schwingbewegung in an sich bekannter Weise nach oben wandern.

Im Abstand unterhalb der Schwingplatte 1 ist eine ebenfalls metallische koaxiale Grundplatte 4 vorgesehen, die über Gummimetallfüße 5 auf einer Unterlage aufgestellt ist und auf ihrer Oberseite zwei Schwingankermotoren 6 trägt, deren grundsätzlicher Aufbau aus Fig. 2 zu ersehen ist:

Jeder der Schwingankermotoren 6 weist ein im wesentlichen trapezförmiges, aus Dynamoblechen geschichtetes Statorblechpaket 7 auf, welches mit einer im Querschnitt rechteckigen Öffnung 8 versehen ist, welche auf einer Seite teilweise durch die zu dieser Seite parallele ebene Polfläche 9 eines angeschnittenen Polstückes 10 begrenzt ist. Beidseitig des Polstückes 10 sind in dem Statorblechpaket 7 in die Öffnung 8 mündende Schlitze 11 vorhanden, die die Spulenseiten einer auf das Polstück 10 aufgeschobenen Erregerspule 12 aufnehmen. Die rechtwinklig zu der Polfläche 9 gemessene Weite der Öffnung 8 ist derart gewählt, daß die Erregerspule 12 in die Öffnung 8 eingeführt und von dieser aus auf das Polstück 10 aufgeschoben werden konnte.

Die beiden Blechpakete 7 sind mit ihren größten Breitseiten aneinander stoßend und längs eines Durchmessers 13 der Grundplatte 1 ausgerichtet, mittels bei 14 angedeuteter Schraubenbolzen mit der Grundplatte 1 verschraubt und dabei gleichzeitig zusammengepreßt. Die Anordnung ist dabei derart getroffen, daß die beiden Polflächen 9 parallel zu dem den Durchmesser 13 rechtwinklig - schneidenden Durchmesser 15 ausgerichtet sind und in gleichem Abstand von diesem - jedoch auf verschiedenen Seiten von diesem Durchmesser 15 - stehen, wie dies aus Fig. 2 zu entnehmen ist.

In jede der beiden Öffnungen 8 ragt mit allseitigem Spiel ein im Querschnitt rechteckiges, aus geschichteten Dynamoblechen zusammengesetztes blockartiges Ankerblechpaket 16, das mittels Schraubenbolzen 170 und Paßstiften 180 lagerichtig auf der zugewandten Innenseite der Schwingplatte 1 befestigt ist. Zwischen der Polfläche 9 und der gegenüberliegenden Ankerpolfläche ist in dem veranschaulichten Ruhezustand ein Luftspalt 17 vorhanden, dessen Größe abhängig davon eingestellt ist, ob die Schwingplatte 1 nach dem sogenannten "Tischtuch-Wegzieh-Effekt" oder dem sogenannten "Wurf-Effekt" arbeitet.

Die Schwingplatte 1 ist gegen die Grundplatte 4 über Federelemente horizontal und vertikal begrenzt beweglich elastisch abgestützt, welche durch angeschnittene Stege 18 eines zylinderförmig gebogenen Federblechstreifens 19 gebildet sind.

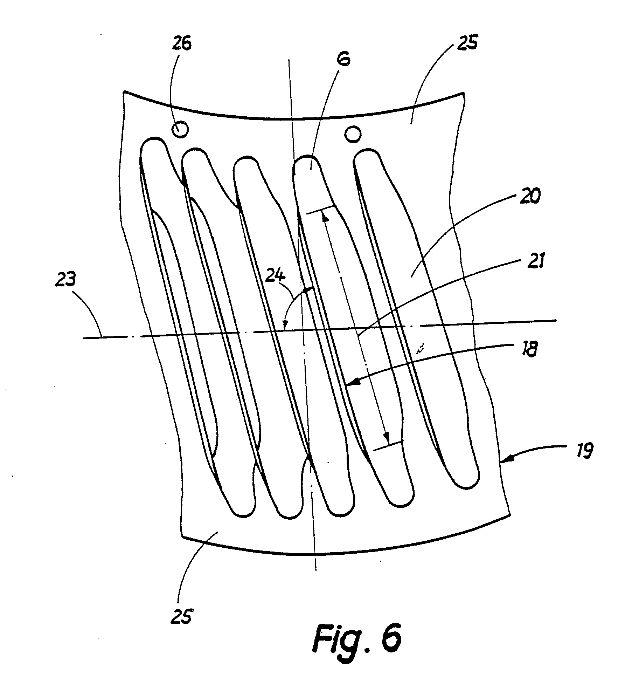

Wie insbesondere den Fig. 2,6 zu entnehmen, weist der Federblechstreifen 19 über seine Länge gleichmäßig verteilte, gleichgestaltete Ausnehmungen 20 auf, die in den flachliegenden Federblechstreifen 19 eingestanzt wurden. Die länglichen Ausnehmungen 20 sind über den größten Teil ihrer Länge parallelflankig seitlich begrenzt; sie begrenzen ihrerseits zwischen sich die Stege 18, die ersichtlich (Fig.6) gleichgestaltet sind. Die Stege 18 sind über eine mit 21 bezeichneten größten Teil ihrer Längserstreckung derart verwunden, daß sie in diesem Bereich einen Winkel von 90° mit der Blechstreifenebene einschließen. Dieser Winkel ist in Fig. 2 mit 22 bezeichnet.

Die gleichgestalteten Stege 18 sind in einer Richtung gleich geneigt angeordnet, derart, daß sie mit der die Ober-und Unterseite der Schwingplatte 1 enthaltenden Horizontalebene 23 einen Winkel kleiner 90° einschließen, der in einer praktischen Ausführungsform in der Größenordnung von ca. 70° liegt und in Fig. 2 mit 24 bezeichnet ist.

Beidseitig der mit ihren Enden in gleichen Abständen von der Seitenberandung des Federblechstreifens 19 liegenden Ausnehmungen 20 ist jeweils ein randseitiger durchgehender streifenartiger Befestigungsbereich 25 ausgebildet, der gleichmäßig verteilt angeordnete Löcher 26 enthält, durch die im montierten Zustand (Fig.1) Befestigungsschrauben 27 verlaufen, mittels derer der Federblechstreifen 19 an einen entsprechenden Umfangswandungsbereich der Schwingplatte 1 und der Grundplatte 4 angeschraubt ist. Die stumpf aneinander stoßenden Kanten des zylindrisch gebogenen Federblechstreifens 19 sind in der Regel miteinander unverbunden; eine Verbindung, bspw. durch Verschweißung, ist in Einzelfällen denkbar.

Werden die beiden Erregerspulen 12 mit Wechselstrom oder pulsierendem Gleichstrom gespeist, so ziehen die Polflächen 9 die gegenüberliegenden Ankerblechpakete 16 an, mit dem Ergebnis, daß der Schwingplatte, bezogen auf Fig. 2, eine Drehbewegung im Gegenuhrzeigersinn erteilt wird. Dabei werden die schrägliegenden, durch die Stege 18 gebildeten Federelemente entsprechend verformt und damit unter Vorspannung gesetzt. Sowie die Erregung der Erregerspulen 12 verschwindet, führt diese elastische Vorspannung der Stege 18 die Schwingplatte 1 im Uhrzeigersinn in - schneller Bewegung wieder in ihre Ausgangsstellung zurück. Auf diese Weise wird eine hin-und hergehende Kreisschwingbewegung der Schwingplatte 1 erzeugt, deren hingehender und deren hergehender Teil durch unterschiedliche Beschleunigungswerte gekennzeichnet sind, mit dem Ergebnis, daß auf das in dem Behälter 2 enthaltene Massengut eine kreisförmige Transportbewegung ausgeübt wird, die in bekannter Weise dazu führt, daß, wie schon erwähnt, die Teile auf den Leisten 3 nach oben wandern.

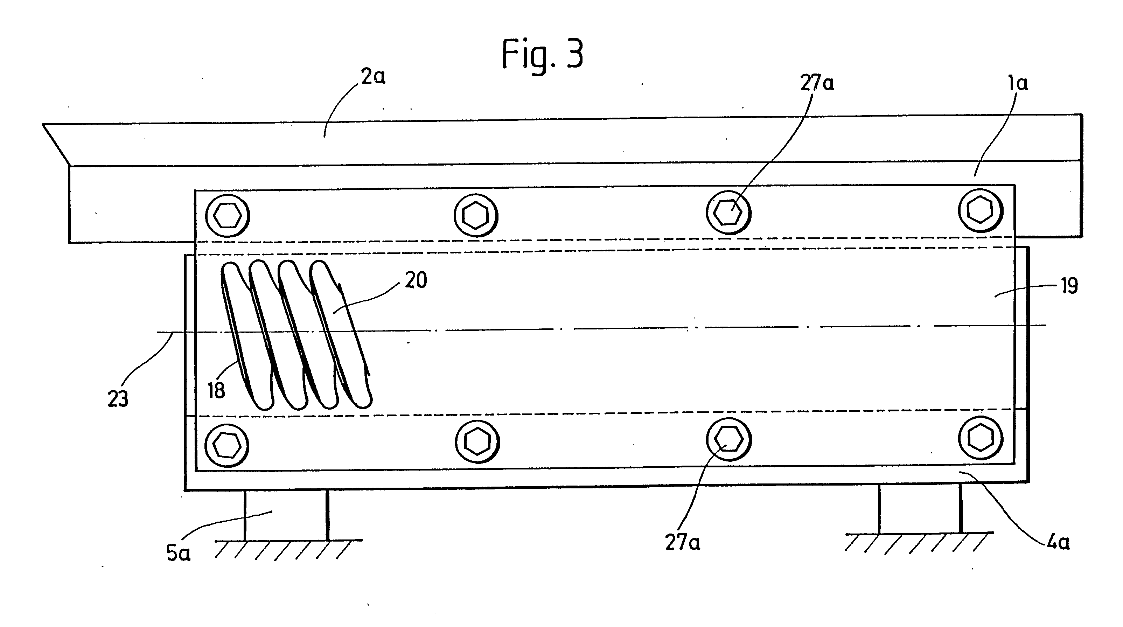

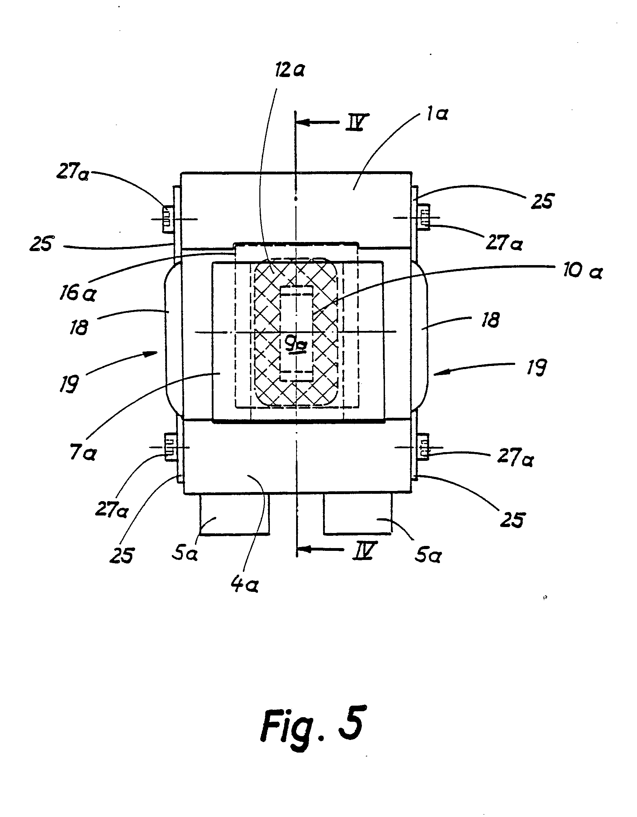

Der in den Fig. 3 bis 5 dargestellte Schwingförderer ist als Linearförderer ausgebildet und nach dem gleichen Prinzip aufgebaut wie der bereits geschilderte Kreisförderer nach den Fig. 1 und 2. Gleiche oder einander entsprechende Teile sind deshalb mit gleichen Bezugszeichen versehen und nicht nochmals erläutert.

Die Schwingplatte 1a und die zu dieser im Abstand parallel angeordnete Grundplatte 4a weisen in diesem Falle eine rechteckige, leistenartige Gestalt mit einander gegenüberliegenden parallelen Seiten auf. Die Grundplatte 4a ist über Gummimetall-Füße 5a auf eine Unterlage aufgesetzt. Die Schwingplatte 1a trägt eine längliche Schwing-oder Förderrinne 2a.

Auf der Grundplatte 4a ist ein in Gestalt eines länglichen, im Querschnitt rechteckigen und aus flachliegenden Dynamoblechstreifen geschichteten Blechpaketes ausgebildeter gemeinsamer Stator 7a angeordnet, der mit der Grundplatte 4 mittels nicht weiter dargestellter Schraubenbolzen verschraubt ist. Der Stator 7a ist mit zwei symmetrisch zu der Längsmittellinie der Grundplatte 4 im Abstand hintereinander liegenden, im Querschnitt rechteckigen Öffnungen 8a ausgebildet, die einseitig, ähnlich wie in Fig. 2, durch zu der Grundplatte 4a rechtwinklig verlaufende vertikale Polflächen 9a angeschnittener Polstücke 10a begrenzt sind. Auf die Polstücke 10a sind die Erregerspulen 12a aufgeschoben; die Weite der Öffnungen 8a ist auf die axiale Höhe der Erregerspulen 12a wieder derart abgestimmt, daß diese in die Öffnungen eingebracht und von diesen aus auf die Polstücke 10a aufgeschoben werden können.

In jede der beiden Öffnungen 8a ragt mit Spiel ein parallelflankig begrenztes, blockartiges Ankerblechpaket 16a, das ebenfalls aus entsprechenden Dynamoblechstücken geschichtet und mittels nicht dargestellter Schraubenbolzen an der Schwingplatte 1a befestigt ist. Auf der Schwingplatte 1a selbst kann ein rinnenförmiger Behälter angeordnet sein, der nicht weiter dargestellt ist.

Die Schwingplatte 1a ist gegen die Grundplatte 4a über Federelemente horizontal und vertikal begrenzt beweglich elastisch abgestützt, welche durch die bereits erläuterten Stege 18 des Federblechstreifens 19 gebildet sind. Zwei entsprechend der Länge der Grundplatte 4a abgeschnittene Stücke des Federblechstreifens 19 nach Fig. 6 sind in diesem Falle mittels der Schrauben 27a an den einander gegenüberliegenden Längsseitenwänden der Schwingplatte 1a und der Grundplatte 4a befestigt. Die Stege 18 beider Federblechstreifenstücke 19 sind dabei in die gleiche Richtung bezüglich der Horizontalebene 23 geneigt.

Die Funktion des Linearförderers entspricht jener des bereits erläuterten Kreisförderers:

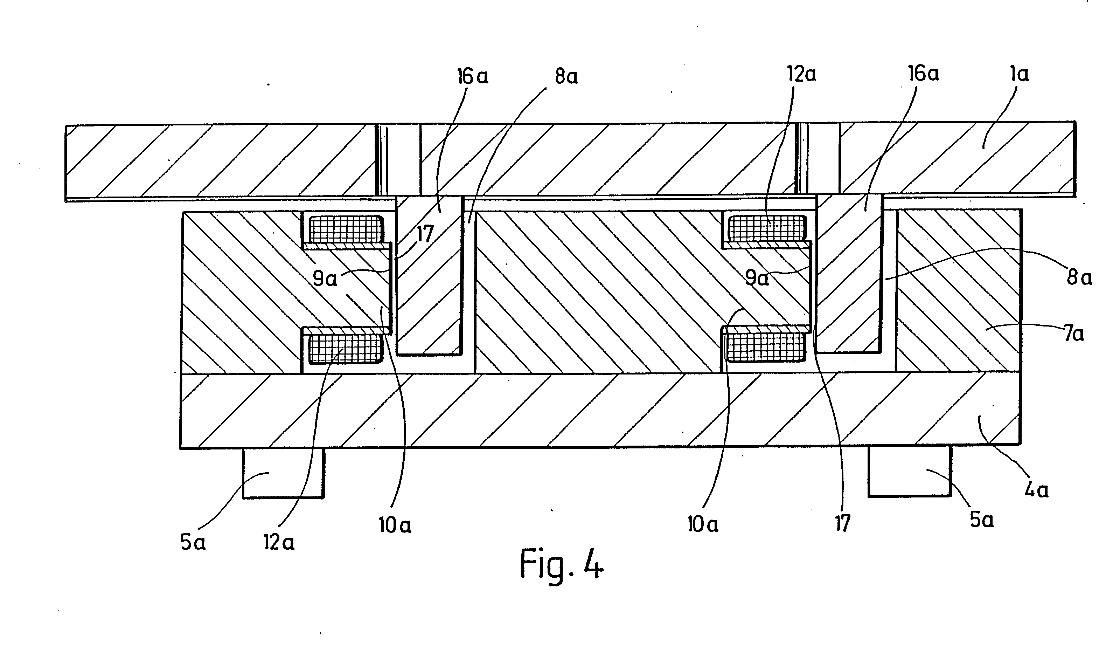

Im Ruhezustand nach Fig. 4 stehen die Ankerpolflächen in einem vorbestimmten Abstand 17 zu den ihnen parallel gegenüberliegenden Statorpolflächen 9a. Bei Erregung der Erregerspulen 12a wird die Schwingplatte 1a, bezogen auf Fig. 4, nach links bewegt, wobei die Stege 18 elastisch verformt werden. Sowie die Erregung verschwindet, können die Stege 18 unter der Wirkung ihrer elastischen Vorspannung die Schwingplatte 1a in einer - schnellen Hubbewegung, bezogen auf Fig. 4, nach rechts bewegen, so daß sich eine hin-und hergehende Schwingbewegung der Schwingplatte 1a in der in Fig. 4 in der horizontalen Zeichenebene liegenden Hauptförderrichtung ergibt.

Die Zahl der jeweils von einem Statorpolstück 10a mit der Erregerspule 12a und dem zugeordneten Ankerblechpaket 16a gebildeten Schwingankermotoren ist nicht begrenzt; sie kann entsprechend den Abmessungen und der gewünschten Antriebsleistung des Schwingförderers auch größer als 2 gewählt sein, wie auch Ausführungsformen denkbar sind, die lediglich einen solchen Schwingankermotor aufweisen.

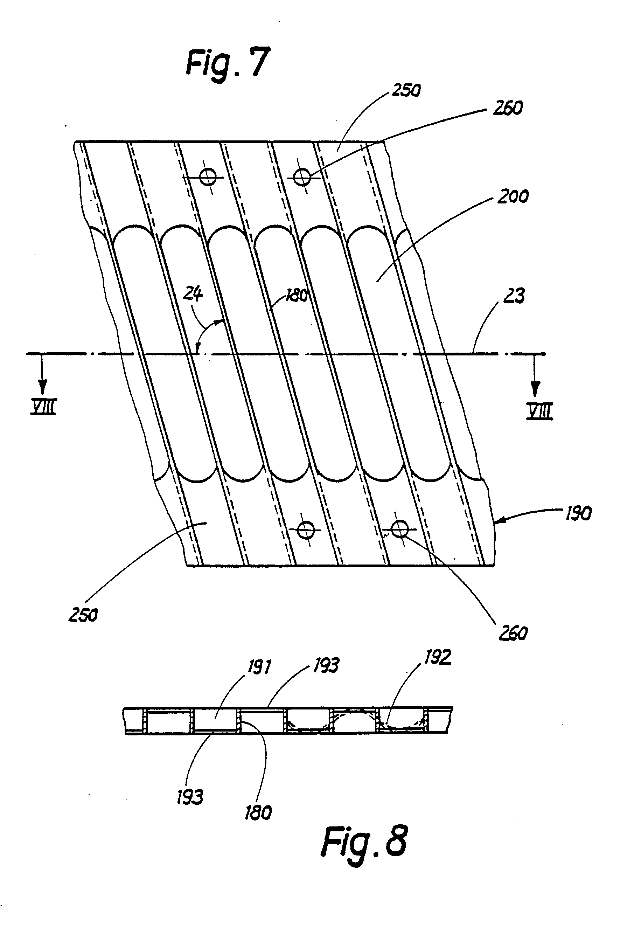

In den Fig. 7,8 ist eine abgewandelte Ausführungsform des Federblechstreifens 19 nach Fig. 6 dargestellt. Bei dieser Ausführungsform ist der Federblechstreifen 190 in Streifenlängsrichtung mäanderförmig gebogen, wie dies aus Fig. 8 zu entnehmen ist. Dadurch werden im Querschnitt im wesentlichen rechteckige Vertiefungen 191 ausgebildet, die unter dem gleichen Winkel 24, gegen die zu der Schwingplatte 1 bzw. 1a parallele Horizontalebene 23 geneigt,eine rechteckige Querschnittsgestalt aufweisen und sich abwechselnd zu der Schwingplatte 1,1a und der Grundplatte 4,4a sowie auf die entgegengesetzte Außenseite hin öffnen.

Alternativ könnte der Federblechstreifen 190 auch gewellt ausgebildet sein, wie dies in Fig. 8 bei 192 gestrichelt angedeutet ist. Die länglichen Vertiefungen 191 sind dann im Querschnitt bogenförmig gekrümmt, bspw. teilkreisförmig.

Die länglichen, seitlich parallellflanking begrenzten Ausnehmungen 200 sind wieder in regelmäßigen Abständen und in gleicher Gestaltung und Ausrichtung ausgebildet. Sie liegen, wie aus Fig. 8 hervorgeht, in den im montierten Zustand des Federblechstreifens 190 parallel zu den Seitenflächen der Schwingplatte 1, 1a und der Grundplatte 4,4a ausgerichteten Wandbereichen 193. Dies bedeutet wiederum, daß die Stege 180 in den quer zu der Schwingplattenberandung ausgerichteten Wandbereichen der Wellen 192 oder der rinnenartigen Vertiefungen 191 ausgebildet sind.

Die sich beidseitig der Ausnehmungen 200 längs der Seitenberandungen des Federblechstreifens 190 erstreckenden streifenartigen Befestigungsbereiche sind mit 250 bezeichnet.

Grundsätzlich sind auch Ausführungsformen denkbar, bei denen die Stege 180 im Bereiche der Wandungsteile bei 193, d.h. des Bodens der Vertiefungen 191 bzw. der Wellen 192 angeordnet sind.

Die Federblechstreifen 19, 190 können bei geringer Blechdicke unmittelbar gestanzt und gebogen werden. Bei größerer Blechdicke ist es zweckmäßig, das Stanzen und Biegen der Blechstreifen im weichen Materialzustand vorzunehmen und die fertigen Blechstreifen anschließend zu härten.

Alternativ sind auch Ausführungsformen vorstellbar, bei denen die dünnen Materialstreifen 19, 190 aus einem Kunststoffmaterial hergestellt sind, das über entsprechende Federungseigenschaften verfügt.

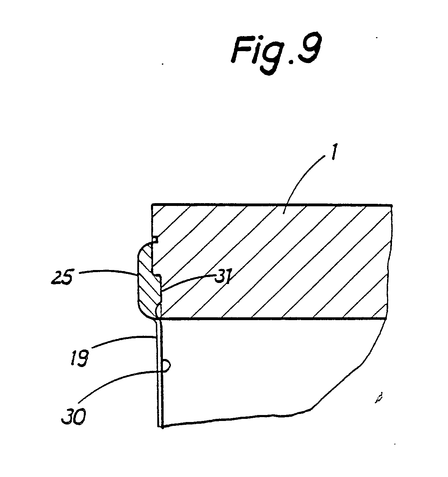

Die Federblechstreifen 19, 190 können schließlich auch gleich dazu benutzt werden, eine sich zwischen der Schwingplatte 1,1a und der Grundplatte 4, 4a erstreckende elastische Abdichtungsmanschette zu haltern, die zwischen den Blechstreifen und der zugeordneten Seitenwand der Schwing-oder Grundplatte angeordnet und durch die Befestigungsbereiche 25, 250 festgeklemmt ist. Diese grundsätzliche Anordnung ist in Fig. 9 schematisch veranschaulicht, wo die Gummimanschette bei 30 angedeutet ist. Die Gummimanschette 30 liegt in einer randseitigen Ausnehmung 31 der Schwingplatte 1 und entsprechend der nicht dargestellten Grundplatte 4; sie ist durch den in dem Befestigungsbereich 25 bzw. 250 entsprechend profilierten Federblechstreifen 19 bzw. 190 festgeklemmt.

Die anhand der erläuterten Ausführungsbeispiele geschilderten Schwingförderer weisen spezielle Schwingankermotoren auf, die mit geschichteten Stator-und Ankerblechpaketen ausgebildet sind. Die Erfindung ist nicht auf Schwingförderer mit solcherart ausgebildeten Schwingankermotoren beschränkt; sie ist grundsätzlich für alle Schwingförderer brauchbar, bei denen es darauf ankommt, eine von Antriebsmitteln in eine Schwingbewegung versetzte Schwingplatte federelastisch gegen eine Grundplatte oder eine ortsfeste Verankerung abzustützen. Dabei sind auch Ausführungsformen denkbar, bei denen die Federblech-oder Materialstreifen 19 bzw. 190 auf der der Schwingplatte abgewandten Seite nicht an einer Grundplatte 4 bzw. 4a, sondern unmittelbar an den Statoren 7 bzw. dem Stator 7a befestigt sind. Bei einem Kreisförderer kann dazu eine zylindrische Statorausbildung oder -anordnung vorteilhaft sein.

Bei den beschriebenen Schwingförderern ist die für die Standfestigkeit erforderliche, mit der Grundplatte 4 bzw. 4a verbundene träge Masse durch die Statorblechpakete 7 bzw. 7a unmittelbar gebildet, so daß sich Zusatzmassen erübrigen. Erforderlichenfalls können solche Zusatzmassen vorgesehen werden; bei anderen Schwingankermotorkonstruktionen können sie auch unerläßlich sein. Auch kann selbstverständlich die Grundplatte 4 bzw.4a Teil eines Chassis oder Grundgestells sein oder durch ein solches ganz oder teilweise gebildet sein, und zwar unabhängig davon, ob dieses eben oder bspw. topfförmig etc. gestaltet ist.

Der beschriebene Kreisförderer (Fig. 1,2) kann unter Verwendung der erläuterten Teile, einschließlich der Blech-oder Materialstreifen 19, abhängig von den Bedingungen des jeweiligen Einsatzzweckes, wahlweise für Rechts-oder Linkslauf eingerichtet sein. Es brauchen dazu lediglich die Statorblechpakete 7 und die Blech-oder Materialstreifen 19 entsprechend der jeweils gewünschten Laufrichtung angeordnet zu werden.

Da die Blech-oder Materialstreifen 19 praktisch beliebig lang ausgebildet werden können, können Kreisförderer beliebigen Durchmessers und insbesondere auch Linearförderer sehr großer Länge hergestellt werden. Dabei ist es in Einzelfällen auch denkbar, die Blech-oder Materialstreifen 19 in einzelne stumpf aneinanderstoßend angeordnete Streifenabschnitte zu unterteilen, die an den Stoßstellen erforderlichenfalls auch miteinander verbunden, bspw. verschweißt oder vernietet, sein können.

Die praktische Erfahrung hat gezeigt, daß die Schwinggüte der beschriebenen Blech-oder Materialstreifen 19, insbesondere auch bei der Ausbildung als Federblechstreifen, sehr gut ist, so daß eine sehr genaue Frequenz-und Amplitudenregelung der Schwingbewegung möglich ist.

**Ansprüche**

1. Schwingförderer mit einer bspw. zur Aufnahme eines Behälters geeigneten Schwingplatte, mit der Schwingplatte eine Schwingbewegung mit einer Hauptförderrichtung erteilenden elektromagnetischen Antriebsmitteln in Gestalt von Schwingankermotoren, die einen ortsfesten Stator, einen mit der Schwingplatte fest verbundenen Anker und eine aus einer Stromquelle mit Wechselstrom oder pulsierendem Gleichstrom speisbare Erregerspule aufweisen, welche auf ein eine mit einer Ankerpolfläche zusammenwirkende Statorpolfläche tragendes Polstück des Stators aufgesetzt ist, sowie mit Federmitteln, durch die die Schwingplatte horizontal und vertikal begrenzt beweglich elastisch abgestützt ist, **dadurch gekennzeichnet, daß die**

Federmittel durch schmale, federelastische Stege (18; 180) eines Ausnehmungen (20;200) aufweisenden Blech-oder dünnen Materialstreifens (19; 190) gebildet sind, durch dessen Ausnehmungen (20;200) die Stege (18; 180) begrenzt sind und der an der Schwingplatte (1; 1a) und den Statoren (7) oder dem Stator (7a) oder einer diese bzw. diesen tragenden Grundplatte (4; 4a) befestigt ist.

2. Schwingförderer nach Anspruch 1, dadurch gekennzeichnet, daß die Ausnehmungen (20;200) ausgestanzt oder ausgeschnitten sind.

3. Schwingförderer nach einem der vorhergehenden Ansprüche, dadurch gekennzeichnet, daß die Stege (18) um ihre Längsachse verwunden sind, derart, daß sie über einen Teil (21) ihrer Länge in Ebenen liegen, die mit der Blech-oder Materialstreifenebene einen vorbestimmten Winkel (22) kleiner oder gleich 90° einschließen.

4. Schwingförderer nach einem der vorhergehenden Ansprüche, dadurch gekennzeichnet, daß die Ausnehmungen (20; 200) in gleichen Abständen angeordnet sind.

5. Schwingförderer nach einem der vorhergehenden Ansprüche, dadurch gekennzeichnet, daß die Stege (18; 180) gegenüber der Schwingplatte (1; 1a) mit gleicher Ausrichtung in einer Richtung geneigt angeordnet sind, derart, daß sie mit der Schwingplatte einen Winkel (24) von ≦ 90° einschließen.

6. Schwingförderer nach einem der vorhergehenden Ansprüche, dadurch gekennzeichnet, daß die länglichen Ausnehmungen (20; 200) zumindest im Bereiche der Stege (18; 180) parallelflankig begrenzt sind.

7. Schwingförderer nach einem der vorhergehenden Ansprüche, dadurch gekennzeichnet, daß der Blechoder Materialstreifen (190) unter Ausbildung von von der Schwingplatte (1; 1a) zu den Statoren (7) oder dem Stator (7a) bzw. der Grundplatte (4; 4a) verlaufenden Wellen (192) oder rinnenförmigen Vertiefungen (191) in Längsrichtung gewellt oder mäanderförmig gebogen ist.

8. Schwingförderer nach Anspruch 7, dadurch gekennzeichnet, daß die Stege (180) in den quer zu der Schwingplattenberandung ausgerichteten Wandbereichen der Wellen (192) oder rinnenförmigen Vertiefungen (191) ausgebildet sind.

9. Schwingförderer nach einem der vorhergehenden Ansprüche, dadurch gekennzeichnet, daß der Blechstreifen (90; 190) aus Federstahl besteht.

10. Schwingförderer nach einem der Ansprüche 1 bis 9, dadurch gekennzeichnet, daß der Materialstreifen aus einem Kunststoffmaterial besteht.

11. Schwingförderer nach einem der vorhergehenden Ansprüche, dadurch gekennzeichnet, daß der Blechoder Materialstreifen (19; 190) an der Schwingplatte (1; 1a) und/oder den Statoren (7) bzw. dem Stator (7a) oder der Grundplatte (4, 4a) in einem randseitigen, durchgehenden Befestigungsbereich (25; 250) befestigt ist.

12. Schwingförderer nach einem der vorhergehenden Ansprüche, dadurch gekennzeichnet, daß der Blech-oder Materialstreifen (19; 190) an der Seitenwand der Schwingplatte (1; 1a) und/oder der Grundplatte (4; 4a) befestigt ist.

13. Schwingförderer nach einem der vorhergehenden Ansprüche, dadurch gekennzeichnet, daß der von den Stegen (18; 180) umschlossene Raum nach außen hin durch eine elastische Manschette (30) abgedichtet ist, die mittels der dem Blech-oder Materialstreifen (19; 190) zugeordneter Befestigungseinrichtungen (27, 27a) randseitig zumindest an der Schwingplatte (1; 1a) befestigt ist.

Fig. 1

**Fig. 2**

# Fig. 3

16a 8a 12a 16a 1a

17

9a 9a 8a

7a

10a 10a 17

5a 12a 4a

5a

0 288 706

Fig. 4

Fig. 5

Fig. 6

## Fig.7

250
260
200
23

24
180

VIII          VIII

190

250
260

## Fig.8

191  193  192

193  180

# Fig.9